(19) Europäisches Patentamt
European Patent Office
Office européen des brevets

(11) EP 0 941 977 A1

(12) EUROPÄISCHE PATENTANMELDUNG

(43) Veröffentlichungstag:
**15.09.1999 Patentblatt 1999/37**

(51) Int. Cl.[6]: **C04B 41/63**, C08F 20/12, C09D 133/06

(21) Anmeldenummer: **99104590.7**

(22) Anmeldetag: **08.03.1999**

(84) Benannte Vertragsstaaten:
**AT BE CH CY DE DK ES FI FR GB GR IE IT LI LU MC NL PT SE**
Benannte Erstreckungsstaaten:
**AL LT LV MK RO SI**

(30) Priorität: **09.03.1998 DE 19810052**

(71) Anmelder:
**BASF AKTIENGESELLSCHAFT**
**67056 Ludwigshafen (DE)**

(72) Erfinder:
- **Schwartz, Manfred**
  **67227 Frankenthal (DE)**
- **Bechert, Berthold**
  **67269 Grünstadt (DE)**

(74) Vertreter:
**Kinzebach, Werner, Dr. et al**
**Reitstötter, Kinzebach & Partner,**
**Postfach 21 11 60**
**67011 Ludwigshafen (DE)**

# (54) Verfahren zur Beschichtung mineralischer Formkörper

(57) Die vorliegende Erfindung betrifft ein Verfahren zur Beschichtung mineralischer Formkörper mit filmbildenden wässrigen Zubereitungen, wobei man nacheinander wenigstens eine 1. Zubereitung, enthaltend wenigstens ein Copolymerisat P1 als Bindemittel und wenigstens ein anorganisches Pigment, auf den mineralischen Formkörper aufbringt, gegebenenfalls trocknet und anschließend wenigstens eine 2. Zubereitung, enthaltend wenigstens ein Copolymerisat P2 als Bindemittel und gegebenenfalls anorganisches Pigment, aufbringt, wobei die Copolymerisate P1 und P2 jeweils aus Monomeren A, B und gegebenenfalls C aufgebaut sind, das dadurch gekennzeichnet ist, dass für die Copolymerisate P1 und P2 jeweils gleiche Monomere A und B ausgewählt werden und die 1. Zubereitung eine mindestens um 10 größere Pigmentvolumenkonzentration als die 2. Zubereitung aufweist, sowie ein Mittel aus den genannten 1. und 2. Zubereitungen und die Verwendung der genannten 1. und 2. Zubereitungen zum Beschichtung mineralischer Formkörper.

EP 0 941 977 A1

## Beschreibung

Die vorliegende Erfindung betrifft ein Verfahren zur Beschichtung mineralischer Formkörper mit filmbildenden, wässrigen Zubereitungen.

Unter mineralischen Formkörpern sind hier und im Folgenden Formkörper aus mineralischen Zuschlägen, wie Sand, Ton, zerkleinertem Gestein etc. und einem mineralischen Bindemittel sowie gegebenenfalls üblichen Zusätzen zu verstehen. Mineralische Bindemittel sind allgemein bekannt. Es handelt sich z. B. um feinteilige anorganische Stoffe, wie Kalk, Gips, Ton und/oder Zement, die im feuchten Zustand geformt werden können und sich beim Selbstüberlassen an der Luft oder auch unter Wasser, gegebenenfalls unter Einwirkung erhöhter Temperatur, nach einer gewissen Zeit steinartig verfestigen.

Die Zuschläge bestehen in der Regel aus körnigem oder faserförmigem natürlichem oder künstlichem Gestein (Kies, Sand, Mineralfasern), in Sonderfällen auch aus Metallen oder organischen Zuschlägen oder aus Gemischen der genannten Zuschläge, mit Korngrößen oder Faserlängen, die dem jeweiligen Verwendungszweck in an sich bekannter Weise angepasst sind. Häufig werden zum Zweck der Farbgebung auch Buntpigmente als Zuschläge mitverwendet.

Beispiele für erfindungsgemäß zu beschichtende mineralische Formkörper sind z.B. Betonröhren, z. B. für Abwasser, Betondachsteine oder Randsteine, Treppenstufen, Bodenplatten, Sockelplatten auf der Basis mineralischer Bindemittel sowie Faserzementplatten, d. h. flächige mineralische Formkörper, die mit anorganischen oder organischen Fasern, z. B. Polyester- oder Nylonfasern, gefüllt sind.

Nachteilig an mineralischen Formkörpern ist, dass unter dem Einfluss der Witterung (insbesondere der Einwirkung von Wasser) die kationischen Bestandteile wie $Ca^{2+}$ im Laufe der Zeit herausgelöst werden, was ihre Festigkeit mindert. Dabei treten oft auch "Ausblühungen" auf. Diese sind vermutlich darauf zurückzuführen, dass mehrwertige Kationen wie $Ca^{2+}$ durch Reaktion mit dem Kohlendioxid aus der Luft an der Oberfläche der mineralischen Formkörper unansehnliche weiße Kalkflecken bilden. Das Erscheinungsbild des Ausblühens kann sowohl bereits während des Erhärtens von frisch zubereiteten mineralischen Formkörpern als auch unter der Einwirkung der Witterung auf bereits erhärtete mineralische Formkörper auftreten.

Zur Vermeidung der vorgenannten nachteiligen Eigenschaften werden die mineralischen Formkörper häufig mit einer Beschichtung versehen. Hierzu werden heute in der Regel wässrige Beschichtungssysteme eingesetzt, die als filmbildenden Bestandteil (Bindemittel) eine wässrige Polymerisatdispersion enthalten. Übliche Bindemittel umfassen Styrol/Acrylester-Copolymerisate, Homo- und Copolymerisate des Vinylacetats, Reinacrylate und ähnliche (vgl. z. B. DE 21 64 256). Die damit erhältlichen Beschichtungen vermochten jedoch den Durchtritt der kationischen Bestandteile (Ausblühen) nicht in befriedigender Weise zu verhindern. Zudem schmutzen derartige Beschichtungen leicht an.

Der Schutz mineralischer Formkörper vor den oben beschriebenen Ausblühungen konnte auch durch Beschichtungsmassen auf der Basis von Styrol/Acrylat-Dispersionen bzw. Reinacrylatdispersionen der EP-A-469 295 und der DE-A-195 14 266 verbessert werden. Hierfür empfiehlt die EP-A-469 295 die Verwendung eines speziellen anionischen Emulgators und die DE-A-195 14 266 die Verwendung von Polymerisaten, welche spezielle Monomere mit Sulfonatgruppen einpolymerisiert enthalten.

Die vorgenannten Zubereitungen werden in der Regel in wenigstens zwei Schichten auf den mineralischen Formkörper aufgebracht. So erhält man durch zweifache Beschichtung mit Methylmethacrylat/Alkylacrylat-Polymeren (sog. Reinacrylate), welche einen geringen Pigmentgehalt aufweisen und die gewünschten Oberflächeneigenschaften, wie z. B. einen hohen Glanz, jedoch mit eingeschränktem Schutz vor Ausblühungen. Die Beschichtung mit einer ersten farbgebenden, vor Ausblühungen schützenden Zubereitung auf Basis von Styrol/Acrylat-Copolymerisaten und anschließend mit einer Zubereitung auf Basis von Reinacrylaten führt zwar zu gutem Schutz vor Ausblühungen und gewährleistet einen hohen Glanz, jedoch sind diese Beschichtungen problematisch hinsichtlich der Langzeitstabilität unter Bewitterungsbedingungen, die sich in Blasenbildung und mangelnder Haftung äußert.

Der vorliegenden Erfindung liegt somit die Aufgabe zugrunde, ein Verfahren und Mittel zur Beschichtung mineralischer Formkörper bereitzustellen, für Beschichtungen, die eine hohe Stabilität unter Bewitterungsbedingungen aufweisen und dem mineralischen Formkörper sehr gute Oberflächeneigenschaften verleihen.

Es wurde nun überraschend gefunden, dass man beschichtete mineralische Formkörper erhält, die die gewünschte Ausblüh- und Witterungsbeständigkeit und gleichzeitig die gewünschten Oberflächeneigenschaften aufweisen, wenn man nacheinander wenigstens zwei wässrige, filmbildende Zubereitungen auf den mineralischen Formkörper aufbringt, wobei die zuerst aufgebrachte 1. Zubereitung ein Copolymerisat P1 und die danach aufgebrachte 2. Zubereitung ein Copolymerisat P2 als Bindemittel enthalten, die Copolymerisate P1 und P2 jeweils aus einpolymerisierten Monomeren A, B und gegebenenfalls C aufgebaut sind, wobei für P1 und P2 jeweils gleiche Monomeren aus A und B und gegebenenfalls Monomere C ausgewählt werden und die 1. Zubereitung eine um wenigstens 10 größere Pigmentvolumenkonzentration als die danach aufgebrachte 2. Zubereitung aufweist.

Die vorliegende Erfindung betrifft somit ein Verfahren und Mittel zur Beschichtung mineralischer Formkörper mit filmbildenden wässrigen Zubereitungen, wobei man nacheinander wenigstens eine 1. Zubereitung, enthaltend wenigstens ein Copolymerisat P1 als Bindemittel und wenigstens ein anorganisches Pigment, auf den mineralischen

Formkörper aufbringt, gegebenenfalls trocknet und anschließend wenigstens eine 2. Zubereitung, enthaltend wenigstens ein Copolymerisat P2 als Bindemittel und gegebenenfalls anorganisches Pigment, aufbringt, wobei die Copolymerisate P1 und P2 jeweils aus einpolymerisierten Monomeren A, B und gegebenenfalls C aufgebaut sind und

- die Monomere A Vinylaromaten (A1) und Methacrylsäureester von $C_1$-$C_4$-Alkanolen (A2),
- die Monomere B von A2 verschiedene Ester α,β-ethylenisch ungesättigter Carbonsäuren mit $C_1$-$C_{12}$-Alkanolen (B1) und Vinylester von aliphatischen Carbonsäuren (B2) und
- die Monomere C davon verschiedene α,β-ethylenisch ungesättigte Monomere

sind, das dadurch gekennzeichnet ist, dass für die Copolymerisate P1 und P2 jeweils gleiche Monomere A und B ausgewählt werden und die zuerst aufgebrachte Zubereitung eine mindestens um 10 größere Pigmentvolumenkonzentration als die danach aufgebrachte Zubereitung aufweist.

Als Pigmentvolumenkonzentration (PVK) bezeichnet man den mit 100 multiplizierten Quotienten aus Pigmentvolumen plus Füllstoffvolumen und Bindemittelvolumen plus Pigmentvolumen plus Füllstoffvolumen (analog Ullmann's Encyclopedia of Industrial Chemistry, 4. Auflage, Band 15, S. 667).

Üblicherweise erfolgt die Herstellung der Copolymerisate P1 bzw. P2 durch radikalische Polymerisation wenigstens zweier ethylenisch ungesättigter Monomere A, B und gegebenenfalls weiterer Monomere C pro Copolymerisat. Die Monomere A umfassen zwei Monomere A1 und A2, die Monomere B umfassen zwei Monomere B1 und B2. Erfindungswesentlich ist, dass sowohl für P1 als auch für P2 jeweils gleiche Monomere aus A und B ausgewählt sind. Demnach enthalten die erfindungsgemäßen Copolymerisate P1 und P2 als einpolymerisierte Monomere A entweder Monomere A1 oder Monomere A2 oder jeweils Monomere A1 und A2, und als einpolymerisierte Monomere B entweder Monomere B1 oder Monomere B2 oder jeweils Monomere B1 und B2.

Geeignete Monomere A1 sind vinylaromatische Monomere, wie Styrol, α-Methylstyrol, o-Chlorstyrol oder Vinyltoluole, geeignete Monomere des A2 sind Methacrylsäureester von $C_1$-$C_4$-Alkanolen. Bevorzugte Methacrylsäureester sind Methacrylsäuremethylester, Methacrylsäureethylester, Methacrylsäure-n-propylester, Methacrylsäureisopropylester und Methacrylsäure-n-butylester. Besonders bevorzugt ist Methacrylsäuremethylester als Monomer A2. In bevorzugten Ausführungsformen des Verfahrens bzw. Mittels sind die Monomere A entweder Styrol oder Methylmethacrylat. Geeignete Monomere B1 umfassen von A2 verschiedene Ester α,β-ethylenisch ungesättigter Carbonsäuren mit $C_1$-$C_{12}$-Alkanolen. Geeignet sind beispielsweise die Ester von $C_3$-$C_8$-Monocarbonsäuron, wie Acrylsäure, Crotonsäure und Vinylessigsäure. Bevorzugt sind die Ester der Acrylsäure. Geeignete $C_1$-$C_{12}$-Alkanole umfassen Methanol, Ethanol, n-Propanol, i-Propanol, 1-Butanol, 2-Butanol, Isobutanol, tert.-Butanol, n-Hexanol, 2-Ethylhexanol und $C_5$-$C_8$-Cycloalkanole, wie Cyclopentanol oder Cyclohexanol. Bevorzugt sind insbesondere Ester der Acrylsäure mit $C_2$-$C_8$-Alkanolen, besonders bevorzugt sind Ethylacrylat, n-Butylacrylat und Ethylhexylacrylat. Ebenfalls geeignet sind die Methacrylsäureester von $C_5$-$C_{12}$-Alkanolen. Geeignete Monomere B2 umfassen Vinylester von aliphatischen $C_1$-$C_{18}$-Monocarbonsäuren, wie Vinylacetat, Vinylpropionat, Vinylbutyrat, Vinylvalerat, Vinylhexanoat, Vinyl-2-ethylhexanoat, Vinyldecanoat, Vinylpivalat, Vinyllaurat, Vinylstearat sowie im Handel befindliche Monomere VEOVA® 5-11 (VEOVA® X ist ein Handelsname der Fa. Shell und steht für Vinylester von α-verzweigten, aliphatischen Carbonsäuren mit X C-Atomen, die auch als Versatic® X-Säuren bezeichnet werden).

Die Monomere A und B machen in der Regel, bezogen auf die Gesamtmonomermenge, wenigstens 65 Gew.-%, vorzugsweise wenigstens 90 Gew.-% und insbesondere wenigstens 95 Gew.-% aus. Die Monomere C werden in der Regel in Mengen < 35 Gew.-%, vorzugsweise < 10 Gew.-% und insbesondere < 5 Gew.-%, bezogen auf die Gesamtmenge der Monomere A, B und C, verwendet.

Die Copolymerisate P1 bzw. P2 enthalten in der Regel wenigstens ein weiteres Monomer C einpolymerisiert. Geeignete Monomere C umfassen von Monomeren A und B verschiedene, α,β-ethylenisch ungesättigte Monomere. Hierzu zählen α,β-ethylenisch ungesättigte $C_3$-$C_8$-Mono- und Dicarbonsäuren (Monomere C1), wie Acrylsäure, Methacrylsäure, Crotonsäure, Vinylessigsäure, Maleinsäure, Fumarsäure, Itaconsäure, Acrylamidoglykolsäure und Methacrylamidoglykolsäure, die Amide von $C_3$-$C_8$-Monocarbonsäuren (Monomere C2), insbesondere Acrylamid und Methacrylamid, ethylenisch ungesättigte Sulfonsäuren (Monomere C3), wie Vinylsulfonsäure, 2-Acrylamido-2-methylpropansulfonsäure, 2-Acryloxyethansulfonsäure und 2-Methacryloxyethansulfonsäure, 3-Acryloxy- und 3-Methacryloxypropansulfonsäure, Vinylbenzolsulfonsäure und deren Salze, vorzugsweise deren Alkalimetallsalze oder deren Ammoniumsalze und insbesondere deren Natriumsalze. Die Monomere C1 werden üblicherweise in Mengen von 0,1 bis 10 Gew.-%, vorzugsweise von 0,2 bis 5 Gew.-% und insbesondere 0,5 bis 2,5 Gew.-%, bezogen auf die Gesamtmenge an Monomeren A + B + C eingesetzt. Die Monomere C2 werden üblicherweise in Mengen von 0,1 bis 10 Gew.-%, vorzugsweise 0,2 bis 5 Gew.-% und insbesondere 0,5 bis 2,5 Gew.-%, wiederum bezogen auf die Gesamtmenge an Monomeren A + B + C , eingesetzt. Die Monomere C3 werden üblicherweise in Mengen von 0,05 bis 5 Gew.-% und vorzugsweise von 0,1 bis 3 Gew.-%, bezogen auf die Gesamtmenge an Monomeren A + B + C , eingesetzt. Bevorzugt

unter den Monomeren C1 bis C3 sind die Monomere C1, insbesondere Acrylsäure, Methacrylsäure und Itaconsäure, und die Monomere C2, insbesondere Acrylamid und Methacrylamid. Ganz besonders bevorzugt enthalten die Copolymere P1 und P2 wenigstens ein Monomer C1 und/ oder C3 und wenigstens ein Monomer C2 einpolymerisiert. Vorzugsweise liegt die Gesamtmenge der Monomere C1 bis C3 im Bereich von 0,1 bis 10 Gew.-%, insbesondere im Bereich von 0,2 bis 5 Gew.-%, bezogen auf die Gesamtmenge an Monomeren A + B + C . Die Monomere C können auch Monomere C4 umfassen. Geeignete Monomere C4 sind beispielsweise Siloxangruppen enthaltende Monomere wie die Vinyltrialkoxysilane, z. B. Vinyltrimethoxysilan, Alkylvinyldialkoxysilane oder (Meth)acryloxyalkyltrialkoxysilane, z. B. (Meth)acryloxyethyltrimethoxysilan, (Meth)acryloxypropyltrimethoxysilan. Die Monomere C4 werden, sofern erwünscht, in Mengen von 0,05 bis 5 Gew.-%, insbesondere 0,1 bis 2 Gew.-%, bezogen auf die Gesamtmenge der Monomere A + B + C , eingesetzt.

In bestimmten Ausführungsformen können die Monomere C auch vernetzende Monomere umfassen, vorzugsweise sind jedoch die Copolymerisate P1 und P2 frei von vernetzenden Monomeren.

In einer bevorzugten Ausführungsform des erfindungsgemäßen Verfahrens sind P1 und P2 gleich. P1 und P2 können aber auch verschieden sein. In diesem Falle können die Mengenverhältnisse von A:B, aber auch die Monomere A und B selbst verschieden sein. In letzterem Falle sollten sich die Monomere A in P1 und P2 um nicht mehr als 2 C-Atome unterscheiden; gleiches gilt für die Monomere B.

Bevorzugte Ausführungsformen des Verfahrens betreffen Copolymerisate P1 und P2, bei denen die jeweiligen Mengenverhältnisse A:B um weniger als 30 %, insbesondere um weniger als 20 %, voneinander abweichen. In einer bevorzugten Ausführungsform ist das Mengenverhältnis A:B für P1 und P2 identisch.

In den Copolymerisaten P1 bzw. P2 liegt das Mengenverhältnis der einpolymerisierten Monomere A:B in der Regel zwischen 80:20 und 20:80 Gew.-%.

Typische Monomerkombinationen A/B sind:

- Styrol: n-Butylacrylat im Gewichtsverhältnis 35:65 bis 80:20,
- Styrol: 2-Ethylhexylacrylat im Gewichtsverhältnis 35:65 bis 80:20,
- Methylmethacrylat: n-Butylacrylat im Gewichtsverhältnis 40:60 bis 80:20,
- Methylmethacrylat: 2-Ethylhexylacrylat im Gewichtsverhältnis 35:65 bis 80:20,
- ferner ternäre und quartäre Monomermischungen A/B, bei denen ein Teil des Styrols durch Methylmethacrylat und/oder n-Butylmethacrylat ersetzt ist, oder ein Teil des n-Butylacrylats durch 2-Ethylhexylacrylat, z. B.:
    - Methylmethacrylat : Styrol : 2-Ethylhexylacrylat im Gewichtsverhältnis 20:20:60,
    - n-Butylmethacrylat : Styrol : 2-Ethylhexylacrylat im Gewichtsverhältnis 35:10:55,
    - Methylmethacrylat : n-Butylmethacrylat : n-Butylacrylat im Gewichtsverhältnis 30:35:35,
    - Styrol : n-Butylacrylat : 2-Ethylhexylacrylat im Gewichtsverhältnis 50:25:25 und
    - Styrol : Methylmethacrylat : n-Butylacrylat : 2-Ethylhexylacrylat im Gewichtsverhältnis 20:20:30:30.

Ferner ist es erfindungswesentlich, dass die Copolymere eine Glasübergangstemperatur von -25 bis +80 °C aufweisen. Hierbei ist zu beachten, dass eine hochwertige Beschichtung nur dann erhalten wird, wenn die wässrigen Zubereitungen der filmbildenden Copolymere P1 bzw. P2 eine Mindestfilmbildetemperatur unterhalb der Anwendungstemperatur aufweisen. Die Mindestfilmbildetemperatur hängt nun ihrerseits von der Glasübergangstemperatur $T_G$ der Copolymeren P1 bzw. P2 ab (siehe Ullmanns Encyclopedia of Industrial Chemistry, 5 ed, Vol. A 21, 1992, S. 169). Somit führt grundsätzlich eine niedrige Glasübergangstemperatur der Copolymeren P1 bzw. P2 zu einer verbesserten Filmbildung. Andererseits hat eine niedrige Glasübergangstemperatur eine erhöhte Klebrigkeit der Beschichtung und damit eine erhöhte Anschmutzbarkeit der Beschichtung zur Folge. Ferner bedingt eine niedrige Glasübergangstemperatur in der Regel eine verschlechterte Blockfestigkeit. Grundsätzlich lässt sich die Mindestfilmbildetemperatur dadurch beeinflussen, dass man der wässrigen Zubereitung sogenannte schwerflüchtige, äußere Weichmacher, z. B. Ester der Phthalsäure und/ oder leichtflüchtige, niedrig siedende organische Lösungsmittel als Filmbildehilfsmittel zusetzt.

Es hat sich als vorteilhaft erwiesen, die erfindungsgemäß zur Anwendung kommenden Zubereitungen auf ihre konkreten Anwendungsziele durch Wahl einer geeigneten Glasübergangstemperatur für die Copolymere P1 und P2 abzustimmen. So hat sich für die Beschichtung von Betonsteinen eine Glasübergangstemperatur $T_G$ für die Copolymere P oberhalb -10 °C und insbesondere oberhalb +10 °C als vorteilhaft erwiesen. Vorzugsweise wird bei dieser Ausführungsform der Erfindung die Glasübergangstemperatur $T_G$ +50 °C nicht überschritten. Bei Faserzementplatten, die zum einen bei erhöhter Temperatur beschichtet werden können und die zum anderen eine hohe Blockfestigkeit aufweisen sollen, hat sich hingegen eine Glasübergangstemperatur oberhalb +20 °C und insbesondere oberhalb +30 °G als vorteilhaft erwiesen. Unter der Glasübergangstemperatur $T_G$ wird hier die gemäß ASTM D 3418-82 durch Differentialthermoanalyse (DSC) ermittelte "midpoint temperature" verstanden (vgl. Ullmann's Encyclopedia of Industrial Chemistry, 5th Edition, Volume A 21, VCH Weinheim 1992, S. 169 sowie Zosel, Farbe und Lack 82 (1976), S. 125-134, siehe

auch DIN 53765). Ferner kann die Glasübergangstemperatur auch aus der Messung des E-Moduls im Kriechversuch als Funktion der Temperatur bestimmt werden.

In diesem Zusammenhang erweist es sich als hilfreich, die Glasübergangstemperatur $T_G$ der Copolymeren P1 bzw. P2 abzuschätzen. Nach Fox (T.G. Fox, Bull. Am. Phys. Soc. (Ser. II) 1, 123 [1956] und Ullmanns Enzyklopädie der technischen Chemie, Weinheim (1980), S. 17, 18) gilt für die Glasübergangstemperatur von schwach vernetzten Mischpolymerisaten bei großen Molmassen in guter Näherung

$$\frac{1}{T_g} = \frac{X^1}{T_g^{\,1}} + \frac{X^2}{T_g^{\,2}} + \ldots\ldots \frac{X^n}{T_g^{\,n}}$$

wobei $X^1$, $X^2$, ..., $X^n$ die Massenbrüche 1, 2, ..., n und $T_g^1$, $T_g^2$, ..., $T_g^n$ die Glasübergangstemperaturen der jeweils nur aus einem der Monomeren 1, 2, ..., n aufgebauten Polymeren in Grad Kelvin bedeuten. Letztere sind z. B. aus Ullmann's Encyclopedia of Industrial Chemistry, VCH, Weinheim, Vol. A 21 (1992) S. 169 oder aus J. Brandrup, E.H. Immergut, Polymer Handbook 3rd ed, J. Wiley, New York 1989 bekannt.

Die Herstellung der in den erfindungsgemäßen Verfahren zur Anwendung kommenden, in den wässrigen Zubereitungen 1 und 2 enthaltenen Copolymere P1 und P2 kann grundsätzlich auf alle denkbaren Arten der radikalischen Copolymerisation ethylenisch ungesättigter Monomere erfolgen, z. B. durch Lösungs-, Fällungs-, Substanz-, Emulsions- oder Suspensionspolymerisation. Bevorzugt wird die radikalische, wässrige Emulsionspolymerisation der vorgenannten Monomere in Gegenwart wenigstens eines radikalischen Polymerisationsinitiators und gegebenenfalls einer oder mehrerer grenzflächenaktiver Substanzen, da hier die Copolymere P1 und P2 in Form wässriger Dispersionen erhalten werden. Selbstverständlich sind jedoch auch die anderen Polymerisationsmethoden gangbar. Gegebenenfalls kann es dann erforderlich sein, die Copolymere P1 und P2 nachträglich in eine wässrige Dispersion (Sekundärdispersion) zu überführen. Auch können die Copolymere P1 und P2 in Form von Lösungen in Wasser/Lösungsmittel-Gemischen eingesetzt werden.

Bevorzugt enthalten die erfindungsgemäßen Zubereitungen die Copolymere P1 und P2 in Form wässriger Dispersionen. Hierin können die Copolymerteilchen mittlere Teilchengrößen im Bereich von 50 bis 1 000 nm aufweisen. Verfahren zur Einstellung der Polymerteilchengröße sind beispielsweise aus der EP-A-567 819 bekannt.

Als radikalische Polymerisationsinitiatoren kommen alle diejenigen in Betracht, die in der Lage sind, eine radikalische wässrige Emulsionspolymerisation auszulösen. Auch können für diesen Zweck Redoxinitiatorsysteme verwendet werden, die eine geringe Menge einer im Polymerisationsmedium löslichen Metallverbindung enthalten, deren metallische Komponente in mehreren Wertigkeitsstufen auftreten kann, z. B. Eisen(II)sulfat. Ebenfalls bevorzugte Initiatoren sind Alkaliperoxodisulfate, wie Natriumperoxodisulfat, oder Ammoniumperoxodisulfat. Vorzugsweise beträgt die Menge der eingesetzten radikalischen Initiatorsysteme, bezogen auf die Gesamtmenge der zu polymerisierenden Monomeren, 0,05 bis 2 Gew.-%, vorzugsweise 0,1 bis 1 Gew.-%.

Für die Durchführung der Emulsionspolymerisation geeignete grenzflächenaktive Substanzen sind die üblicherweise für diese Zwecke eingesetzten Schutzkolloide und Emulgatoren. Die grenzflächenaktiven Substanzen werden üblicherweise in Mengen bis zu 10 Gew.-%, vorzugsweise 0,5 bis 5 Gew.-% und insbesondere 1 bis 4 Gew.-%, bezogen auf die zu polymerisierenden Monomere eingesetzt.

Geeignete Schutzkolloide sind beispielsweise Polyvinylalkohole, Stärke- und Cellulosederivate oder Vinylpyrrolidon enthaltende Copolymerisate. Auch Gemische aus Emulgatoren und/oder Schutzkolloiden können verwendet werden. Vorzugsweise werden als grenzflächenaktive Substanzen ausschließlich Emulgatoren eingesetzt, deren relative Molekulargewichte im Unterschied zu den Schutzkolloiden üblicherweise unter 2000 liegen. Sie können sowohl anionischer, kationischer als auch nichtionischer Natur sein. Zu den anionischen Emulgatoren zählen Alkali- und Ammoniumsalze von Alkylsulfaten (Alkylrest: $C_8$-$C_{12}$), von Schwefelsäurehalbestern ethoxylierter Alkanole (EO-Grad: 2 bis 50, Alkylrest: $C_{12}$ bis $C_{18}$) und ethoxylierter Alkylphenole (EO-Grad: 3 bis 50, Alkylrest: $C_4$-$C_9$), von Alkylsulfonsäuren (Alkylrest: $C_{12}$-$C_{18}$) und von Alkylarylsulfonsäuren (Alkylrest: $C_9$ bis $C_{18}$).

Zu den anionischen grenzflächenaktiven Substanzen zählen auch Verbindungen der allgemeinen Formel I,

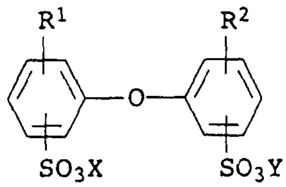

(I)

worin $R^1$ und $R^2$ Wasserstoff oder $C_4$-$G_{24}$-Alkyl bedeuten und nicht gleichzeitig Wasserstoff sind, und X und Y Alkalimetallionen und/ oder Ammoniumionen sein können. Die Verbindungen I sind allgemein bekannt, z. B. aus der EP-A-469 295. Besonders vorteilhaft sind Verbindungen I, in denen X und Y Natrium, $R^1$ ein verzweigter Alkylrest mit 12 C-Atomen und $R^2$ Wasserstoff oder gleich $R^1$ ist. Häufig werden technische Gemische verwendet, die einen Anteil von 50 bis 90 Gew.-% des monoalkylierten Produktes aufweisen, beispielsweise Dowfax® 2A1 (Warenzeichen der Dow Chemical Company).

Geeignete nichtionische Emulgatoren sind araliphatische oder aliphatische nichtionische Emulgatoren, beispielsweise ethoxylierte Mono-, Di- und Trialkylphenole (EO-Grad: 3 bis 50, Alkylrest: $C_4$-$C_9$), Ethoxylate langkettiger Alkohole (EO-Grad: 3 bis 50, Alkylrest: $C_8$-$C_{36}$), sowie Polyethylenoxid/Polypropylenoxid-Blockcopolymere. Bevorzugt werden anionische Emulgatoren, insbesondere Emulgatoren der allgemeinen Formel I, oder Kombinationen aus wenigstens einem anionischen und einem nichtionischen Emulgator eingesetzt.

Das Molekulargewicht der Polymerisate kann durch Zugabe geringer Mengen, in der Regel bis zu 2 Gew.-%, bezogen auf die zu polymerisierenden Monomere, einer oder mehrerer, das Molekulargewicht regelnder Substanzen, z. B. organische Thioverbindungen, Silane, Allylalkohole oder Aldehyde eingestellt werden.

Die Emulsionspolymerisation kann sowohl kontinuierlich als auch nach der Batchfahrweise, vorzugsweise nach einem halbkontinuierlichen Verfahren erfolgen. Dabei können die zu polymerisierenden Monomere kontinuierlich, einschließlich Stufen- oder Gradientenfahrweise, dem Polymerisationsansatz zugeführt werden.

Die Monomeren können sowohl als Monomermischung als auch als wässrige Monomeremulsion der Polymerisation zugeführt werden.

Polymerisationsdruck und Polymerisationstemperatur sind von untergeordneter Bedeutung. Im Allgemeinen arbeitet man bei Temperaturen zwischen Raumtemperatur und 120 °C, vorzugsweise bei Temperaturen von 40 bis 110 °C und besonders bevorzugt zwischen 50 und 100 °C.

Im Anschluss an die eigentliche Polymerisationsreaktion ist es gegebenenfalls erforderlich, die erfindungsgemäßen, wässrigen Polymerisatdispersionen weitgehend frei von Geruchsträgern, wie Restmonomeren und anderen organischen flüchtigen Bestandteilen zu gestalten.

Auf diesem Wege sind Polymerisatdispersionen mit Polymergehalten bis zu 80 Gew.-%, bezogen auf das Gesamtgewicht der Dispersion, zugänglich. Für die Herstellung der erfindungsgemäß zur Anwendung kommenden Zubereitungen werden aus praktischen Gründen vorzugsweise Dispersionen mit Polymergehalten im Bereich von 30 bis 70 Gew.-%, insbesondere 40 bis 65 Gew.-%, eingesetzt.

Vorzugsweise werden die Polymerisatdispersionen mit Basen, insbesondere Alkalihydroxidlösungen, wie Natron- oder Kalilauge neutralisiert, wobei ein pH-Wert im Bereich von 7 bis 8 besonders bevorzugt ist.

Die erfindungsgemäß zur Anwendung kommenden 1. und 2. Zubereitungen können grundsätzlich beliebig ausgestaltet werden, d. h. in Form von Lösungen oder Dispersionen der Copolymere P1 bzw. P2. Als Lösungs- bzw. Dispergiermedium werden bevorzugt wässrige Lösungsmittel, d. h. Wasser oder Mischungen aus Wasser und einem mit Wasser mischbaren organischen Lösungsmittel, z. B. einem $C_1$-$C_4$-Alkanol, wie Methanol, Ethanol, n- oder iso-Propanol, n-, iso-, 2- oder tert.-Butanol, Glykol, Propylenglykol, Butylenglykol, Glycerin, Diethylenglykol, Triethylenglykol, Tetrahydrofuran o. ä. verwendet.

Bevorzugt kommen die erfindungsgemäßen Copolymere P1 bzw. P2 in Form wässriger Zubereitungen, die nicht mehr als 50 Gew.-%, insbesondere nicht mehr als 20 Gew.-% und speziell nicht mehr als 10 Gew.-%, bezogen auf das Gesamtgewicht der Zubereitung, mit Wasser mischbare Lösungsmittel enthalten, zur Anwendung. Ganz besonders bevorzugt enthalten die erfindungsgemäßen Zubereitungen außer Wasser und abgesehen von üblichen Frostschutzmitteln und Filmbildehilfsmitteln keine organischen Lösungsmittel. In diesen Zubereitungen liegen die Copolymere P1 und P2 in der Regel in Form wässriger Dispersionen vor.

Die Lösungen bzw. Dispersionen der Copolymere P1 und P2 können erfindungsgemäß als solche verwendet werden. Die Zubereitungen enthalten jedoch in der Regel 0,1 bis 30 Gew.-% übliche Hilfsmittel. Ferner enthalten die wässrigen Zubereitungen, sofern die Herstellung der Copolymere P1 bzw. P2 durch radikalische, wässrige Emulsionspolymerisation erfolgt ist, auch die für diesen Zweck eingesetzten, grenzflächenaktiven Substanzen, wie Emulgatoren und/oder Schutzkolloide.

Übliche Hilfsmittel sind beispielsweise Netzmittel, Fungizide, Entschäumer, Verdickungsmittel, Gefrierschutzmittel, Verlaufsförderer, Weichmacher und Filmbildehilfsmittel.

Ferner ist es erfindungswesentlich, dass wenigstens die 1. Zubereitung Füllstoffe und/oder anorganische Pigmente enthält. Auch die 2. Zubereitung kann Füllstoffe und/oder anorganische Pigmente enthalten, jedoch ist es erfindungswesentlich, dass besagte gefüllte und/oder pigmentierte 1. Zubereitung eine um wenigstens 10 größere Pigmentvolumenkonzentration als die gegebenenfalls gefüllte und/oder pigmentierte 2. Zubereitung aufweist. In der Regel weist die 1. Zubereitung eine Pigmentvolumenkonzentration im Bereich von 11 bis 70, vorzugsweise im Bereich von 15 bis 55 und insbesondere im Bereich von 20 bis 50 auf. In der Regel weist die 2. Zubereitung eine Pigmentvolumentkonzentration von weniger als 60, vorzugsweise von weniger als 45 und insbesondere von weniger als 40 auf. Soweit die 2. Zubereitung gefüllt und/oder pigmentiert ist, weist sie in der Regel eine PVK von mindestens 0,1, vorzugsweise mindestens 0,5 und bevorzugt von mindestens 10 auf.

Typische Füllstoffe umfassen Alumosilicate, z. B. Feldspäte, Silicate, z. B. Kaolin, Talkum, Glimmer, Magnesit, Erdalkalicarbonate, z. B. Calciumcarbonat, beispielsweise in Form von Calcit oder Kreide, Magnesiumcarbonat, Dolomit, Erdalkalisulfate, z. B. Calciumsulfat, Siliciumdioxid etc. Typische Pigmente sind beispielsweise Titandioxid, vorzugsweise in der Rutilform, Bariumsulfat, Zinkoxid oder Lithopone (Zinksulfid + Bariumsulfat). Zu dekorativen Zwecken können die Zubereitungen auch farbige Pigmente, beispielsweise Eisenoxide, Ruß, Graphit, Zinkgelb, Zinkgrün, Ultramarin, Manganschwarz, Antimonschwarz, Manganviolett, Pariser Blau oder Schweinfurter Grün enthalten.

In den gefüllten und/oder pigmentierten, wässrigen 1. bzw. 2. Zubereitungen liegt der Gesamtgehalt an Copolymer P1 bzw. P2 im Bereich von 10 bis 60 Gew.-%, vorzugsweise im Bereich von 20 bis 40 Gew.-%, der Gehalt an Hilfsmitteln im Bereich von 0,1 bis 30 Gew.-% und vorzugsweise im Bereich von 0,5 bis 10 Gew.-% und der Gehalt an Füllstoffen und/oder Pigmenten im Bereich von 10 bis 60 Gew.-% und insbesondere 15 bis 40 Gew.-%. Die Menge an Pigmenten und/oder Füllstoffen liegt im Allgemeinen zwischen 50 und 450 Gewichtsteilen, bezogen auf 100 Gewichtsteile Copolymer P1 bzw. P2 in der wässrigen Zubereitung. Ferner werden pigmenthaltige Zubereitungen neben den Filmbildehilfsmitteln und den Entschäumern vorzugsweise auch ein Dispergier- bzw. Netzmittel enthalten.

Das erfindungsgemäße Verfahren umfasst die Beschichtung mineralischer Formkörper mit den zuvor beschriebenen filmbildenden, wässrigen Zubereitungen, wobei man nacheinander wenigstens eine erste, wie zuvor beschriebene 1. Zubereitung, enthaltend wenigstens ein Copolymerisat P1 als Bindemittel und wenigstens ein anorganisches Pigment, auf den mineralischen Formkörper aufbringt, gegebenenfalls trocknet und anschließend wenigstens eine zweite, wie zuvor beschriebene 2. Zubereitung, enthaltend wenigstens ein Copolymerisat P2 als Bindemittel und gegebenenfalls anorganisches Pigment, auf die bereits beschichtete Oberfläche des mineralischen Formkörpers aufbringt und anschließend trocknet. In der Regel wird die Summe der aufzutragenden Menge der wässrigen Zubereitungen im Bereich von 100 bis 700 $g/m^2$ (nass gerechnet), entsprechend einem getrockneten Auftrag von 50 bis 400 $g/m^2$ und insbesondere einem trockenen Auftrag von 100 bis 300 $g/m^2$ betragen, wobei der Erstauftrag mit der 1. Zubereitung 50 bis 90 Gew.-%, vorzugsweise 60 bis 80 Gew.-% der Summe der aufzutragenden Mengen entspricht Der Auftrag der 1. bzw. 2. Zubereitungen kann in an sich bekannter Weise durch Spritzen, Spachteln, Rakeln, Rollen oder Gießen erfolgen. Die nach dem Aufbringen der 1. Zubereitung gegebenenfalls sich anschließende Trocknung kann sowohl bei Raumtemperatur als auch bei erhöhter Temperatur, beispielsweise im Bereich von 40 bis 100 °C, erfolgen. Der Trocknungsschritt nach dem Aufbringen der zweiten Dispersion erfolgt in der Regel bei erhöhter Temperatur, vorzugsweise im Bereich von 40 bis 120 °C.

Das erfindungsgemäße Verfahren ist grundsätzlich auf alle Formkörper anwendbar, die ein mineralisches Bindemittel enthalten. Seine bevorzugten Wirkungen entfaltet es bei mineralischen Formkörpern, die Zement als Bindemittel enthalten (Betonsteine und Faserzementplatten). Unter Betonsteinen versteht man geformte Gebilde aus Beton und/oder Gasbeton, z. B. Platten, Rohre und/oder Dachziegel (Betondachsteine). Der Betonstein wird in üblicher Weise aus fertig gemischtem Beton durch ein Strangpressverfahren in bekannter Weise hergestellt. Die erfindungsgemäßen wässrigen Zubereitungen, insbesondere die 1. Zubereitung, bieten nunmehr den Vorteil, dass sie nicht nur auf den fertig abgebundenen, sondern auch auf den frisch zubereiteten, nicht abgebundenen, sogenannten "grünen" Betonstein aufgebracht werden können. Das Aufbringen einer 1. Zubereitung auf einen frisch zubereiteten, mineralischen Formkörper stellt eine bevorzugte Ausführungsform des erfindungsgemäßen Verfahrens dar. Das Trocknen der erfindungsgemäß beschichteten, "grünen" Betonsteine kann in üblicher Weise, gegebenenfalls bei Raumtemperatur oder erhöhter Temperatur durchgeführt werden. Vorzugsweise wird der beschichtete "grüne" Betonstein in eine sog. Kammer eingebracht. Dort wird in einem etwa 6 bis 24 Stunden dauernden Abbindeprozess bei Temperaturen im Bereich von 40 bis 70 °C der Beton abgebunden und das Copolymerisat P1 der 1. Zubereitung verfilmt. Nach diesem Prozess wird der Stein wenigstens ein zweites Mal mit der erfindungsgemäßen wässrigen 2. Zubereitung besprüht. Eine erneute Trocknung erfolgt in einem Tunnelofen bei etwa 80 bis 120 °C liegenden Umlufttemperaturen.

Bereits abgebundene mineralische Formkörper können auch bei üblichen Umgebungstemperaturen, z. B. Raumtemperatur, mit den erfindungsgemäßen Zubereitungen beschichtet werden.

Die vorteilhaften Eigenschaften der erfindungsgemäßen, wässrigen Zubereitungen kommen auch bei mineralischen Formkörpern zum Tragen, die mit einem Zementslurry beschichtet sind. Der Auftrag der erfindungsgemäßen, wässrigen Zubereitungen kann in der oben beschriebenen Weise erfolgen.

Ferner erweisen sich die vorteilhaften Eigenschaften der erfindungsgemäßen, wässrigen Zubereitungen ähnlich vorteilhaft bei sog. Faserzementplatten, d. h. flächigen, mineralischen Formkörpern, die Zement als Bindemittel enthalten und die mineralische oder organische Fasern, z. B. Polyester- und/oder Polyamidfasern als Zuschläge enthalten. Der Auftrag der erfindungsgemäßen, wässrigen Zubereitungen erfolgt in der Regel in der für "grüne" Betonsteine beschriebenen Weise.

Die nach dem erfindungsgemäßen Verfahren beschichteten mineralischen Formkörper zeichnen sich einerseits durch guten Schutz vor Ausblühungen und guter Beständigkeit, auch unter Bewitterungsbedingungen aus, wie z. B. geringe Wasseraufnahme, hohe Rutschfestigkeit, geringe Alterungserscheinungen, wie Blasenbildung oder Rissbildung. Andererseits besitzen sie sehr gute Oberflächeneigenschaften, die sich in hohem Glanz, hoher Blockfestigkeit

und guten Haftungseigenschaften äußern. Diese Eigenschaften sind insbesondere für Betondachsteine von Bedeutung, die daher eine bevorzugte Ausführungsform der Erfindung darstellen. Zudem ist das erfindungsgemäße Verfahren aufgrund des vereinfachten Beschichtungsaufbaus und der vergleichsweise niedrigen Konzentration an als Bindemittel eingesetzten Copolymerisaten ökonomisch vorteilhaft. Demnach führt das erfindungsgemäße Verfahren zu verbesserter Konservierung und verbesserten Eigenschaften von mineralischen Formkörpern.

Die derart beschichteten mineralischen Formkörper sind neu und ebenfalls Gegenstand der vorliegenden Erfindung.

Die erfindungsgemäßen Mittel umfassen zwei separate Komponenten (1. und 2. Zubereitungen), die gemeinsam oder in getrennten Verpackungseinheiten vorliegen können.

Die im folgenden angegebenen Beispiele sollen die vorliegende Erfindung verdeutlichen.

Beispiele

I. Herstellung der filmbildenden Copolymerisate P1 bzw. P2 in Form wässriger Dispersionen (Dispersion D1 und Dispersion D2)

Herstellungsvorschrift

a) Dispersion D1

In einem Polymerisationsgefäß legte man 400 g entionisiertes Wasser, 1,4 g Itaconsäure und 6,22 g Emulgatorlösung 1 vor und erwärmt auf 85 °C.

In einem Zulaufgefäß 1 stellte man eine Emulsion aus

| | |
|---|---|
| 200,0 g | entionisiertem Wasser |
| 9,3 g | Emulgatorlösung 1 |
| 37,3 g | Emulgatorlösung 2 |
| 413,0 g | Methylmethacrylat |
| 287,0 g | n-Butylacrylat |
| 28,0 g | 50 gew.-%ige Lösung des Natriumsalzes der 2-Acrylamido-2-methylpropansulfonsäure in Wasser |
| 7,0 g | 50 gew.-%ige Lösung von Acrylamid in Wasser |

her.

In einem zweiten Zulaufgefäß 2 stellte man eine Lösung von 1,4 g Natriumperoxodisulfat in 75 g Wasser her.

Anschließend gab man unter Beibehaltung der 85 °C nacheinander in einer Portion 49 g von Zulauf 1 und 7,6 g von Zulauf 2 in die Vorlage und ließ 30 min reagieren.

Anschließend gab man über räumlich getrennte Zuläufe, zeitgleich beginnend, die Restmengen von Zulauf 1 innerhalb 3 h und von Zulauf 2 innerhalb 3,5 h unter Beibehaltung der 85 °C in das Polymerisationsgefäß. Nach Beendigung von Zulauf 2 ließ man 1 h nachpolymerisieren, kühlte auf 25 °C ab und neutralisierte mit Natronlauge (pH ≈ 8).

Der Feststoffgehalt der erhaltenen Dispersion lag bei etwa 49 Gew.-%. Die Glasübergangstemperatur $T_G$ des erhaltenen Copolymers beträgt 37,8, bestimmt mittels DSC nach DIN 53765.

| | |
|---|---|
| Emulgatorlösung 1: | 45 gew.-%ige wässrige Lösung einer als Dowfax® 2A1 (Dow Chemical) im Handel üblichen Wirksubstanz (Gemisch von Mono- und Di-$C_1$-$C_{12}$-alkyl-Verbindung der allgemeinen Formel I als Natriumsalz). |
| Emulgatorlösung 2: | 15 gew.-%ige wässrige Lösung des Natriumsalzes eines $C_{12}$-Alkylsulfats |

b) Dispersion D2

In einem Polymerisationsgefäß wurde eine wässrige Emulsion aus

| | |
|---|---|
| 105,0 g | entionisiertes Wasser |
| 54,0 g | Styrol |
| 44,0 g | n-Butylacrylat |
| 2,0 g | Acrylsäure |
| 0,5 g | γ-Methacryloylpropyltrimethoxysilan |
| 0,5 g | Natriumlaurylsulfat |

0,5 g Natriumperoxodisulfat

bei 90 °C nach der Emulsionszulauffahrweise nach der Methode der radikalischen, wässrigen Emulsionspolymerisation polymerisiert.
Der Feststoffgehalt der erhaltenen Dispersion lag bei etwa 50 Gew.-%. Die Glasübergangstemperatur $T_G$ des erhaltenen Copolymerisats beträgt +30 °C, bestimmt mittels DSC nach DIN 53765.

II. Bestimmung der anwendungstechnischen Eigenschaften

1. Herstellung einer pigmentierten Dispersion mit PVK 27: Je 100 g der Dispersionen D1 bzw. D2 wurden mit 0,5 g eines Entschäumers (Tego Foamex®825 der Th. Goldschmidt AG) und 0,5 g eines technischen Gemisches der Di-n-butylester der Bernstein-, Glutar- und Adipinsäure versetzt. Aus der so konfektionierten Dispersion D1 wurde eine Dispersionsfarbe formuliert. Zu diesem Zweck suspendierte man 253,0 g eines handelsüblichen Füllstoffs (Calciumcarbonat/Calciumsilikat) und 38,8 g Eisenoxid-Rotpigment der BAYER AG in 112,0 g Wasser. Hierzu gab man unter Rühren 598,0 g der konfektionierten Dispersion D1. Die so erhaltene Farbe ließ man vor ihrer anwendungstechnischen Prüfung 48 h bei Raumtemperatur reifen.

2. Analog zu der zuvor beschriebenen Vorgehensweise stellte man aus den konfektionierten Dispersionen D1 und D2 weitere Farben mit einer PVK von 35, 42 und 45 her.

| | PVK 35 | PVK 42 | PVK 45 |
|---|---|---|---|
| Dispersion | 495,5 g D2 | 421,5 g D1 | 392,4 g D1 |
| Wasser | 144,1 g | 165,3 g | 173,6 g |
| Pigment | 72,1 g | 82,6 g | 86,8 g |
| Füllstoff | 288,3 g | 330,6 g | 347,2 g |

3. Beschichten des mineralischen Formkörpers: Jeweils eine der unter II 1. beschriebenen Farben wurde mittels einer Spritzpistole auf einen "grünen" Betonstein*) aufgebracht (Auftrag etwa 210 g/m$^2$ sog. Nassauftrag). Anschließend trocknet man 2 h bei 40 °C und 75 % rel. Luftfeuchte und dann 4 h bei 40 °C und 95 % rel. Luftfeuchte. Danach brachte man in der gleichen Weise eine zweite Farbe auf (Auftrag etwa 105 g/m$^2$) und trocknete 8 h bei 40 °C und 50 % rel. Luftfeuchte (sog. Trockenauftrag).

III. Anwendungstechnische Prüfung

1. Bestimmung des Ausblühschutzes
Nach der Trocknung legte man den Stein 7 d mit der Oberfläche auf ein 60 °C warmes Wasserbad. Der Grad der Ausblühungen wurde visuell beurteilt. Hierfür wird folgende Notenskala zugrunde gelegt. Die Ergebnisse sind in Tabelle 2 zusammengefasst.

0 = keine Ausblühungen
1 = fast keine Ausblühungen
2 = leichte Ausblühungen
3 = mäßige Ausblühungen
4 = starke Ausblühungen

*) Als "grüner" Betonstein diente ein Flachstein mit den Abmessungen 30 x 23 x 1,8 cm, der durch Extrusion eines Mörtels aus Sand (Korngröße bis 0,3 mm) und Zement (Gewichtsverhältnis Sand/Zement 4:1) sowie Wasser (Wasser/Zement-Gewichtsverhältnis 1:2,5) hergestellt wurde. Der Flachstein hat in der Mitte eine Wölbung, die in ihrem Scheitelpunkt ca. 4 cm von der Grundfläche abgehoben ist.

5 = sehr starke Ausblühungen

2. Bestimmung des Glanzes

Die Teststeine, die bereits nach 1. zur Beurteilung der Ausblühsicherheit herangezogen wurden, werden auch zur Beurteilung des Glanzes verwendet. Dabei wird der Glanz visuell an sog. belasteten Stellen, d. h. in Bereichen, in denen der Wasserdampf mit der Beschichtung in direktem Kontakt stand, beurteilt. Die Ergebnisse sind in Tabelle 2 zusammengefasst. Hierfür wird folgende Notenskala zugrunde gelegt:

0 = sehr hoher Glanz
1 = hoher Glanz
2 = höherer Glanz
3 = geringer Glanz
4 = weniger matt
5 = matt, stumpf

3. Bestimmung der Blasenbildungsneigung

Die Teststeine, die bereits nach 1. und 2. beurteilt sind, werden auch für die Bestimmung der Blasenbildungsneigung verwendet. Dabei wird die Bildung von Blasen visuell an sog. belasteten Stellen (s. o.) beurteilt. Die Ergebnisse sind in Tabelle 2 zusammengefasst. Hierfür wird folgende Notenskala zugrunde gelegt:

0 = nicht vorhanden
1 = schwach erkennbar
2 = gut erkennbar
3 = auffallend
4 = stark auffallend
5 = sehr stark auffallend

4. Bestimmung der Haftung

Die Teststeine, die bereits nach 1. bis 3. beurteilt sind, werden auch für die Bestimmung der Haftung verwendet. Die Haftung wird mittels eines TESA-Bandes an sog. belasteten Stellen (s. o.) bestimmt. Dazu wird ein ca. 10 cm langer, ca. 3 cm breiter Streifen des TESA-Bandes mit einer Gummirolle unter leichtem Andrücken auf die Oberfläche des Steins aufgebracht. Nach einigen Minuten wird der Klebestreifen durch kurzes Reißen abgeschält. Die am Klebeband eventuell haftenden Bestandteile und ihre Menge dient zur Beurteilung. Die Ergebnisse sind in Tabelle 2 zusammengefasst. Hierfür wird folgende Notenskala zugrunde gelegt.

0 = nicht vorhanden
1 = schwach erkennbar
2 = gut erkennbar
3 = auffallend
4 = stark auffallend
5 = sehr stark auffallend

5. Testversuche

Es werden im Folgenden 5 Beispiele (siehe Tabelle 1), bestehend aus 3 Vergleichsbeispielen (VB1 bis VB3) und 2 erfindungsgemäßen Beispielen (B1, B2) bewertet (siehe Tabelle 2). Die Vergleichsbeispiele VB1 und VB2 repräsentieren den ersten und zweiten Auftrag von Zubereitungen erfindungsgemäßer Copolymere als Bindemittel, jedoch nicht erfindungsgemäßen, identischen Pigmentvolumenkonzentrationen in den beiden Zubereitungen. Vergleichsbeispiel VB3 repräsentiert den Auftrag einer nicht erfindungsgemäßen Kombination von Copolymerisaten als Bindemittel, jedoch erfindungsgemäß unterschiedlicher Pigmentvolumenkonzentration in den Zubereitungen.

Tabelle 1

| Beispiele | | | | |
|---|---|---|---|---|
| | Erstauftrag (Nassseite) | | Zweitauftrag (Trockenseite) | |
| | Bindemittel | PVK | Bindemittel | PVK |
| VB1 | D1 | 27 | D1 | 27 |
| VB2 | D2 | 45 | D2 | 45 |
| VB3 | D2 | 45 | D1 | 27 |
| B1 | D1 | 42 | D1 | 27 |
| B2 | D2 | 45 | D2 | 35 |

Tabelle 2

| Ergebnisse | | | | |
|---|---|---|---|---|
| | Ausblühen | Glanz | Blasenbildung | Haftung |
| VB1 | 2 | 2 | 1 | 2 |
| VB2 | 2 | 4 | 1 | 2 |
| VB3 | 1 | 2 | 5 | 2 |
| B1 | 1 | 2 | 1 | 1 |
| B2 | 1 | 2 | 1 | 1 |

**Patentansprüche**

1. Verfahren zur Beschichtung mineralischer Formkörper mit filmbildenden wässrigen Zubereitungen, wobei man nacheinander wenigstens eine 1. Zubereitung, enthaltend wenigstens ein Copolymerisat P1 als Bindemittel und wenigstens ein anorganisches Pigment, auf den mineralischen Formkörper aufbringt, gegebenenfalls trocknet und anschließend wenigstens eine 2. Zubereitung, enthaltend wenigstens ein Copolymerisat P2 als Bindemittel und gegebenenfalls anorganisches Pigment, aufbringt, wobei die Copolymerisate P1 und P2 jeweils aus Monomeren A, B und gegebenenfalls C aufgebaut sind und

   die Monomere A Vinylaromaten (A1) und/oder Methacrylsäureester von $C_1$-$C_4$-Alkanolen (A2),

   die Monomere B von A2 verschiedene Ester $\alpha,\beta$-ethylenisch ungesättigter Carbonsäuren mit $C_1$-$C_{12}$-Alkanolen (B1) und/oder Vinylester von aliphatischen Carbonsäuren (B2) und

   die Monomere C davon verschiedene $\alpha,\beta$-ethylenisch ungesättigte Monomere

   sind, dadurch gekennzeichnet, dass für die Copolymerisate P1 und P2 jeweils gleiche Monomere A und B ausgewählt werden und die 1. Zubereitung eine mindestens um 10 größere Pigmentvolumenkonzentration als die 2. Zubereitung aufweist.

2. Verfahren nach Anspruch 1, dadurch gekennzeichnet, dass sich entweder die Monomere B in P1 von den Monomeren B in P2 in ihrer Kohlenstoffanzahl um maximal 2 Kohlenstoffatome unterscheiden oder die Monomere A und die Monomere B für P1 und P2 identisch sind.

3. Verfahren nach einem der vorhergehenden Ansprüche, dadurch gekennzeichnet, dass in den Copolymerisaten P1 und P2 die Mengenverhältnisse von A:B um weniger als 30 % voneinander abweichen.

**4.** Verfahren nach einem der vorhergehenden Ansprüche, dadurch gekennzeichnet, dass die Copolymerisate P1 und P2 jeweils wenigstens 80 Gew.-% einpolymerisierte Monomere A und B enthalten.

**5.** Verfahren nach einem der vorhergehenden Ansprüche, dadurch gekennzeichnet, dass die Copolymere P1 und P2 Glasübergangstemperaturen $T_g$(P1) und $T_g$(P2) im Bereich von -25 bis +80 °C aufweisen.

**6.** Verfahren nach einem der vorhergehenden Ansprüche, dadurch gekennzeichnet, dass die 1. Zubereitung eine Pigmentvolumenkonzentration im Bereich von 15 bis 55 und die 2. Zubereitung eine Pigmentvolumenkonzentration im Bereich von 0 bis 45 aufweist und die Pigmentvolumenkonzentration in der 1. Zubereitung um mindestens 10 größer als in der 2. Zubereitung ist.

**7.** Verfahren nach einem der vorhergehenden Ansprüche, dadurch gekennzeichnet, dass der trockene Gesamtauftrag der 1. und 2. Zubereitung im Bereich von 50 bis 400 g/m$^2$ liegt.

**8.** Beschichteter mineralischer Formkörper, erhältlich nach einem Verfahren gemäß einem der vorhergehenden Ansprüche.

**9.** Mittel zur Beschichtung mineralischer Formkörper, bestehend aus getrennten Zubereitungen 1 und 2, die jeweils wenigstens ein Copolymerisat P1 bzw. P2 als Bindemittel und wenigstens ein anorganisches Pigment enthalten, wobei Zubereitung 2 auch pigmentfrei sein kann und wobei die Copolymerisate P1 und P2 jeweils aus Monomeren A, B und gegebenenfalls C aufgebaut sind und

die Monomere A Vinylaromaten (A1) und/oder Methacrylsäureester von $C_1$-$C_4$-Alkanolen (A2),

die Monomere B von A2 verschiedene Ester $\alpha,\beta$-ethylenisch ungesättigter Carbonsäuren mit $C_1$-$C_{12}$-Alkanolen (B1) und/oder Vinylester von aliphatischen Carbonsäuren (B2) und

die Monomere C davon verschiedene $\alpha,\beta$-ethylenisch ungesättigte Monomere

sind, und für die Copolymerisate P1 und P2 jeweils gleiche Monomere A und B ausgewählt werden und die 1. Zubereitung eine um mindestens 10 größere Pigmentvolumenkonzentration als die 2. Zubereitung aufweist.

**10.** Verwendung einer 1. und 2. Zubereitung, die jeweils wenigstens ein Copolymerisat P1 bzw. P2 als Bindemittel und wenigstens ein anorganisches Pigment enthalten, wobei Zubereitung 2 auch pigmentfrei sein kann und wobei die Copolymerisate P1 und P2 jeweils aus Monomeren A, B und gegebenenfalls C aufgebaut sind und

die Monomere A Vinylaromaten (A1) und/oder Methacrylsäureester von $C_1$-$C_4$-Alkanolen (A2),

die Monomere B von A2 verschiedene Ester $\alpha,\beta$-ethylenisch ungesättigter Carbonsäuren mit $C_1$-$C_{12}$-Alkanolen (B1) und/oder Vinylester von aliphatischen Carbonsäuren (B2) und

die Monomere C davon verschiedene $\alpha,\beta$-ethylenisch ungesättigte Monomere

sind, und für die Copolymerisate P1 und P2 jeweils gleiche Monomere A und B ausgewählt werden und die 1. Zubereitung eine um mindestens 10 größere Pigmentvolumenkonzentration als die 2. Zubereitung aufweist, zur Beschichtung mineralischer Formkörper.

Europäisches Patentamt

# EUROPÄISCHER RECHERCHENBERICHT

Nummer der Anmeldung
EP 99 10 4590

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| X | CHEMICAL ABSTRACTS, vol. 97, no. 18, 1. November 1982 Columbus, Ohio, US; abstract no. 149668j, XP000186239 * Zusammenfassung * & JP 57 071884 A (DAINIPPON TORYO CO LTD) 4. Mai 1982 --- | 1-10 | C04B41/63 C08F20/12 C09D133/06 |
| D,A | EP 0 469 295 A (BASF AG) 5. Februar 1992 * Seite 2, Zeile 37 - Seite 3, Zeile 17 * * Seite 3, Zeile 51 - Seite 4, Zeile 5 * --- | 1-10 | |
| A | PATENT ABSTRACTS OF JAPAN vol. 015, no. 484 (C-0892), 9. Dezember 1991 -& JP 03 208874 A (KUBOTA CORP), 12. September 1991 * Zusammenfassung * * Seite 390, rechte Spalte * ----- | 1-10 | |

RECHERCHIERTE SACHGEBIETE (Int.Cl.6)

C04B

Der vorliegende Recherchenbericht wurde für alle Patentansprüche erstellt

| Recherchenort | Abschlußdatum der Recherche | Prüfer |
|---|---|---|
| DEN HAAG | 18. Juni 1999 | Rosenberger, J |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

## ANHANG ZUM EUROPÄISCHEN RECHERCHENBERICHT ÜBER DIE EUROPÄISCHE PATENTANMELDUNG NR. EP 99 10 4590

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

18-06-1999

| Im Recherchenbericht angeführtes Patentdokument | Datum der Veröffentlichung | Mitglied(er) der Patentfamilie | Datum der Veröffentlichung |
|---|---|---|---|
| EP 0469295 A | 05-02-1992 | DE 4021502 A | 16-01-1992 |
| | | CA 2046215 A | 06-01-1992 |
| | | DE 59103764 D | 19-01-1995 |
| | | DK 469295 T | 13-02-1995 |
| | | ES 2064813 T | 01-02-1995 |
| | | FI 913278 A | 06-01-1992 |
| | | JP 4231390 A | 20-08-1992 |
| | | NO 303627 B | 10-08-1998 |

EPO FORM P0461

Für nähere Einzelheiten zu diesem Anhang : siehe Amtsblatt des Europäischen Patentamts, Nr.12/82